## Europäisches Patentamt
## European Patent Office
## Office européen des brevets

(19)

(11) Numéro de publication : **0 300 868 B1**

(12)

# FASCICULE DE BREVET EUROPEEN

(45) Date de publication du fascicule du brevet :
**16.10.91 Bulletin 91/42**

(51) Int. Cl.$^5$ : **B01J 20/18**, C01B 3/56,
**B01D 53/02**

(21) Numéro de dépôt : **88401759.1**

(22) Date de dépôt : **06.07.88**

(54) **Adsorbant pour la purification des gaz et procédé de purification.**

(30) Priorité : **17.07.87 FR 8710109**

(43) Date de publication de la demande :
**25.01.89 Bulletin 89/04**

(45) Mention de la délivrance du brevet :
**16.10.91 Bulletin 91/42**

(84) Etats contractants désignés :
**AT BE CH DE ES FR GB GR IT LI LU NL SE**

(56) Documents cités :
**EP-A- 0 008 619**
**DE-A- 1 567 860**
**GB-A- 1 139 920**
**GB-A- 1 478 212**
**LU-A- 41 098**

(73) Titulaire : **RHONE-POULENC CHIMIE**
**25, quai Paul Doumer**
**F-92408 Courbevoie Cédex (FR)**

(72) Inventeur : **Pacaud, Bernard**
**66, Boulevard National**
**F-92000 - Nanterre (FR)**
Inventeur : **Mercier, Marc**
**1010 Chemin /sous/saint/Etienne**
**F-30100 - Ales (FR)**

(74) Mandataire : **Esson, Jean-Pierre et al**
**Rhône-Poulenc Interservices Service Brevets**
**Chimie 25, quai Paul Doumer**
**F-92408 Courbevoie Cedex (FR)**

## Description

L'invention concerne un adsorbant pour purifier les gaz, et un procédé de purification.

Elle concerne plus particulièrement un adsorbant à base de tamis moléculaire du type zéolite utilisé dans le procédé de purification des gaz selon la méthode appelée PSA ou "Pressure Swing Adsorption" ou "TSA" ou "Temperature Swing Adsorption". Ces méthodes consistent brièvement à faire passer le gaz à épurer sur un adsorbant sous une pression élevée et une température basse, puis à régénérer l'adsorbant soit par décompression (PSA) avec un temps de cycle très court de l'ordre de quelques minutes, soit par chauffage (TSA), le temps de cycle étant alors généralement de quelques heures. L'invention concerne les procédés PSA et TSA pour lesquels le taux de recouvrement de l'adsorbant en matières adsorbées est faible. Par taux de recouvrement d'un adsorbant en un produit adsorbé, on entend le rapport entre la masse de produit adsorbé à une pression et température donnée à la masse maximale de gaz adsorbable dans un volume déterminé d'adsorbant. Dans les méthodes PSA et TSA considérées, le taux de recouvrement des adsorbants utilisés est inférieur généralement à 15%.

On connaît, notamment par le brevet français n° 2232511, une utilisation de zéolite de type 5A pour la purification de gaz par adsorption de $CO_2$, CO, $N_2$, $NH_3$, hydrocarbures etc.

Ces composés sont souvent présents comme impuretés dans les procédés de récupération de l'hydrogène, par exemple, à partir de gaz ammoniac craqué, ou dans le procédé de reforming du gaz naturel.

Ainsi, ce brevet décrit une zéolite de type 5A présentant un coefficient d'échange entre le cation $Na^+$ et un cation divalent, avantageusement le calcium, au moins égal à 80%.

Toutefois, cette zéolite utilisée sans liant présente un faible taux de cristallisation entraînant une diminution de la capacité d'adsorption. De plus, la réalisation d'une zéolite à taux d'échange élevé est relativement difficile et onéreuse.

Par ailleurs, il est connu d'utiliser des zéolites de type A mélangées à un liant, par exemple un liant argileux tel que la montmorillinite, la sépiolite ou l'attapulgite. L'adsorbant ainsi obtenu est utilisé pour le séchage des gaz, la désulfuration ou l'adsorption de $CO_2$. Toutefois, l'addition d'un liant argileux, s'il permet de renforcer les propriétés mécaniques de l'adsorbant, entraîne une diminution importante de ces propriétés adsorbantes notamment vis-à-vis de certains composés. Cette diminution, qui n'est pas dramatique pour certaines applications comme le séchage, est au contraire un inconvénient majeur dans le cas de fonctionnement de l'adsorbant à faible taux de recouvrement comme dans les méthodes PSA et TSA considérées.

La demanderesse a trouvé de manière inattendue que l'utilisation d'une argile de type kaolin comme liant d'un adsorbant à base d'un tamis moléculaire du type zéolite permet de conserver les propriétés d'adsorption de la zéolite à un niveau tout à fait satisfaisant.

L'adsorbant ainsi obtenu a des propriétés mécaniques suffisantes pour permettre son utilisation dans un procédé de purification selon la méthode PSA ou TSA.

A cet effet, l'invention propose un adsorbant pour la purification de gaz par adsorption des impuretés plus polaires ou plus polarisables que le ou les gaz à purifier avec un taux de recouvrement faible en impuretés adsorbées. Cet adsorbant est à base de tamis moléculaire et comprend un tamis moléculaire de type zéolite 5A et un liant argileux du type Kaolin, et se caractérise en ce que ledit kaolin a une concentration pondérale à sec en kaolinite au moins égale à 75%, de préférence au moins 80% en poids, et au plus égale à 20% en quartz, de préférence au plus 12%.

Ce pourcentage de kaolinite est exprimé pour une argile séchée c'est-à-dire après calcination de celle-ci à une température de 1.000°C pendant deux heures. Plus généralement, dans le texte ci-dessous, chaque concentration ou pourcentage exprimé en produits secs est déterminé après calcination à une température de 1.000°C pendant deux heures.

L'efficacité d'un adsorbant dans le procédé PSA ou TSA peut être évaluée par la mesure des caractéristiques suivantes pour un composé à adsorber donné, dans le cas présent l'azote qui est l'impureté principale:

— Capacité dynamique pondérale (Cdp) exprimée en g de $N_2$ adsorbé/100 g d'adsorbant

— Rendement de désorption (Rdt) représente le rapport entre la quantité de $N_2$ désorbé et la quantité de $N_2$ adsorbé

— Densité de remplissage (DRT) : exprimée en gramme d'adsorbant/$cm^3$ et qui représente la masse d'adsorbant pouvant être introduite dans un récipient d'un certain volume.

— Capacité dynamique volumique (Cdv) : Cdv = Cdp × DRT (g $N_2$/100 $cm^3$)

— Capacité dynamique pondérale corrigée (Cdpc) Cdpc = Cdp × Rdt

— Capacité dynamique volumique corrigée (Cdvc) Cdvc = Cdv × Rdt

Ces caractéristiques sont déterminées par un test réalisé sur un adsorbant conditionné par un balayage d'azote à 300°C pendant trois heures. Une colonne est remplie à 25°c par ce tamis traité et sec, la colonne est alimentée en hélium. Au temps t = O, un cinquième de l'hélium est remplacé par de l'azote. Dès que l'azote est détecté en sortie, au temps t = tp, appelé également temps de perçage, l'hélium est remis à son débit initial, l'azote étant supprimé. On enregistre alors la quantité d'azote désorbée pendant une durée égale à tp.

Ainsi la capacité dynamique pondérale (Cdp) est égale à la masse d'azote adsorbée entre le temps t = O et le temps t = tp rapporté à 100 g d'adsorbant, le rendement étant égal au taux d'azote élué par rapport à la quantité adsorbée pendant une durée d'élution égale à tp.

La concentration pondérale du liant argileux dans l'adsorbant est comprise entre 10% environ et 40% environ en poids à sec, de préférence entre 10 et 30% en poids.

De préférence, le liant argileux est constitué essentiellement de kaolinite sous forme de plaquettes hexagonales, la majeure partie des plaquettes a un diamètre de cercle circonscrit compris entre 50 et 500 nm (500 et 5.000 Å).

Avantageusement, le tamis a une concentration en halogène et plus particulièrement en chlore inférieure à 0,15% en poids à sec.

L'invention a également pour objet un procédé de purification de gaz selon la méthode PSA ou "Pressure swing adsorption" ou TSA ou "Temperature swing adsorption" utilisant un adsorbant à base de tamis moléculaire, caractérisé en ce qu'il consiste à utiliser un adsorbant comprenant un liant argileux de la famille des kaolinites tel que décrit précédemment.

L'adsorbant de l'invention présente des propriétés mécaniques suffisantes pour supporter les différences de pression ou température appliquées dans les procédés PSA et TSA et des propriétés d'adsorption et plus particulièrement une capacité d'adsorption élevée et nettement supérieure à celle des adsorbants comprenant un liant argileux n'appartenant pas à la famille des kaolinites.

L'invention s'applique notamment à la purification de gaz par adsorption des impuretés telles que azote, oxyde de carbone, méthane, hydrocarbures.

Elle s'applique, par example, à la purification de l'hydrogène et de l'air.

D'autres buts, caractéristiques et avantages de l'invention apparaîtront plus clairement au vu des exemples donnés ci-dessous uniquement à titre indicatif.

A titre d'exemple, nous donnons ci-dessous la description de la fabrication d'une zéolite de type 5A.

Cette zéolite est obtenue à partir d'une zéolite de type 4A par échange d'une partie des cations sodium par des cations divalents, tels que le cation calcium.

La zéolite 4A est obtenue par cristallisation d'un mélange d'aluminate de soude et de silicate de soude. Ce mélange est sous forme de gel et cristallise lentement à une température d'environ 90°C. Le précipité obtenu est ensuite lavé, filtré.

Cette zéolite est mise en contact avec une solution de chlorure de calcium. La suspension ainsi obtenue est agitée pendant environ une heure puis filtrée et essorée.

Ce procédé d'échange des cations d'une zéolite est classique.

En modifiant la concentration en $Ca\,Cl_2$ de la solution, la température ou la durée de la mise en contact de la zéolite avec la solution de $Ca\,Cl_2$, on fait varier le taux d'échange entre le cation divalent (calcium) et le cation monovalent (sodium).

Comme cela sera montré ci-dessous, les propriétés d'adsorption, telles que la Cdp, ne sont que faiblement influencées par le taux d'échange de la zéolite. Toutefois, il est préférable d'utiliser des zéolites présentant un taux d'échange au moins égal à 65% et de préférence compris entre 65 et 85%.

Par ailleurs, dans l'exemple donné ci-dessus, le cation monovalent a été échangé avec le cation le plus fréquemment utilisé, le calcium. Néanmoins, un échange avec d'autres cations divalents est possible, les zéolites ainsi obtenues étant convenables pour l'invention.

Les zéolites sont ensuite séchées. Toutefois, il est possible de les laver préalablement pour éliminer des impuretés telles que le chlore.

La poudre de zéolite ainsi obtenue est mélangée conformément à l'invention à une argile du type kaolin. Ce mélange est malaxé pour obtenir une pâte qui peut être mise en forme, par exemple, par extrusion, granulation.

Selon un mode préféré de l'invention l'adsorbant est mis en forme par extrusion.

Il est possible, si cela est nécessaire, d'ajouter au mélange des additifs facilitant l'extrusion tels que, par exemple, des lubrifiants, plastifiants, la carboxyméthylcellulose étant un exemple d'additif lubrifiant.

Les produits extrudés obtenus sont ensuite séchés pour éliminer le maximum d'eau interstitielle à une température modérée. Le séchage est effectué à une température de l'ordre de 100°C. Le produit obtenu a une perte au feu (PAF) de l'ordre de 20%, après séchage à 1.000°C.

Le produit séché est ensuite activé par calcination pour éliminer le reliquat d'eau interstitielle et toute l'eau adsorbée.

Plusieurs procédés de calcination sont proposés dans la littérature et utilisés pour le séchage des zéolites ou adsorbants à base de zéolite.

Un des procédés préférés de l'invention est une calcination par air chaud soufflé sur l'adsorbant à calciner, tel que de l'air chaud à une température d'environ 600°C. Les autres procédés de calcination sont, bien entendu, convenables pour l'invention.

Les adsorbants obtenus par le procédé décrit ci-dessus sont ensuite évalués selon le test décrit précédemment pour déterminer la capacité dynamique pondérale d'adsorption par rapport à l'azote qui représente une valeur caractéristique de ces produits.

Exemples 1 à 3 comparatifs

Les adsorbants ont été fabriqués à partir d'une même zéolite de type 5A ayant un taux d'échange égal à 75% et une teneur en chlore inférieure à 0,15% en poids.

Ils ont été mis en forme par extrusion après mélange avec 30% de différentes argiles.

Les résultats du test d'adsorption d'azote sont rassemblés dans le tableau I ci-dessous.

## Tableau I - comparaison entre différentes argiles

| Essai | Argile | % poids | DRT | CdpN$_2$ | Cdvc |
|-------|--------|---------|------|------|------|
| 1 | kaolin (1) | 30 | 0,77 | 0,53 | 0,41 |
| 2 | Montmorillonite (2) | 30 | 0,70 | 0,35 | 0,24 |
| 3 | Attapulgite (3) | 30 | 0,51 | 0,41 | 0,21 |

(1) argile en provenance des carrières de Provins (90,3 % kaolinite, 6,2 % quartz)

(2) argile commercialisée sous la dénomination Bentonite

(3) argile commercialisée sous la dénomination Attagel

TABLEAU II

| Exemple | 4 | 5 | 7 | 8 | 9 |
|---|---|---|---|---|---|
| Argile nom commercial | Kaolin SG | Vercoryls | B 22 | MB 30 | PN 34 |
| Fournisseur | Provins | Vercors | Argiles et minéraux (Charentes) | Provins | Provins |
| % quartz | 6,2 | 6,3 | 5,3 | 34,9 | 23,4 |
| % kaolinite | 90,3 | 88,1 | 90,1 | 59,9 | 71,3 |
| DRT | 0,77 | 0,67 | 0,69 | 0,71 | 0,72 |
| $CdpN_2$ | 0,53 | 0,52 | 0,57 | 0,28 | 0,32 |
| $CdvCO_2$ | 0,41 | 0,35 | 0,40 | 0,20 | 0,23 |

Les essais montrent clairement la supériorité de l'adsorbant conforme à l'invention (exemple 1) comprenant comme liant du kaolin.

Exemples 4 à 9

Les exemples 4 à 9 concernent des adsorbants obtenus par mélange d'une zéolite de type 5A avec 30% d'un liant argileux de la famille des kaolinites, originaire de plusieurs gisements, la teneur en quartz et kaolinite des différentes argiles étant variables. Les résultats obtenus sont rassemblés dans le tableau II.

Exemples 10 à 14

Ces exemples ont été réalisés de manière identique aux exemples précédents mais en utilisant plusieurs kaolins contenant des quantités différentes de quartz et de kaolinite et provenant d'une même carrière.
La teneur en liant argileux est également de 30%.
Toutes ces compositions sont conformes à l'invention et présentent des propriétés d'adsorption élevées et peu différentes, comme le montrent les résultats indiqués dans le tableau III.

Tableau III

| Exemple | 10 | 11 | 12 | 13 | 14 |
|---|---|---|---|---|---|
| Argile | SG1 | SG2 | SG3 | CH1 | CH2 |
| Provenance | Kaolin de PROVINS argile "Saint-Genoy" | | | Kaolin de PROVINS argile "Chalotres" | |
| % quartz | 8,7 | 3,3 | 0,65 | 7,7 | 3,8 |
| % kaolinite | 87,4 | 92,3 | 95,7 | 87,8 | 91,8 |
| DRT | 0,64 | 0,62 | 0,625 | 0,63 | 0,63 |
| Cdp | 0,61 | 0,60 | 0,64 | 0,62 | 0,62 |
| Cdvc | 0,39 | 0,37 | 0,40 | 0,39 | 0,39 |

Exemples 15 à 18

Les adsorbants ont été obtenus de manière identique à celui de l'exemple 4 et à partir des mêmes kaolin et zéolite, mais avec des concentrations différentes de liant argileux. Les résultats rassemblés dans le tableau IV ci-dessous montrent clairement que pour une concentration en liant comprise entre 10 et 40% en poids, les propriétés adsorbantes sont d'un niveau élevé, et de préférence entre 10 et 30% en poids.

Tableau IV

| Exemple | 16 | 17 | 18 | 19 |
|---|---|---|---|---|
| Taux de liant | 10 | 20 | 30 | 40 |
| $CdpN_2$ | 0,54 | 0,56 | 0,53 | 0,43 |
| CdVc | 0,32 | 0,37 | 0,37 | 0,32 |
| DRT | 0,64 | 0,74 | 0,77 | 0,82 |
| $EGG^{N/mm}$ | 8,53 | 14,87 | 16,66 | 23,54 |

Ces essais montrent qu'il est possible de substituer une quantité relativement importante de tamis moléculaire ou zéolite, produit onéreux, par de la kaolinite sans modifier notablement la capacité d'adsorption de l'adsorbant.

## Revendications

1. Adsorbant à base de tamis moléculaire pour la purification de gaz par adsorption des impuretés plus polaires ou plus polarisables que le ou les gaz à purifier avec un taux de recouvrement faible en impuretés adsorbées, du type comprenant un tamis moléculaire du type zéolite 5A et un liant argileux du type kaolin, caractérisé en ce que ledit kaolin a une concentration pondérale à sec en kaolinite au moins égale à 75% et au plus égale à 20% en quartz.

2. Adsorbant selon la revendication 1, caractérisé en ce que la concentration pondérale du liant argileux dans l'adsorbant est comprise entre 10% et 40%, de préférence entre 10% et 30%.

3. Adsorbant selon la revendication 1 ou 2, caractérisé en ce que le liant argileux a une concentration pondérale à sec en kaolinite au moins égale à 80%.

4. Adsorbant selon la revendication 1, 2 ou 3, caractérisé en ce que le liant argileux a une concentration pondérale à sec en quartz au plus égale à 12%.

5. Adsorbant selon l'une des revendications 1 à 4, caractérisé en ce que le liant argileux est constitué essentiellement de kaolinite sous forme de plaquettes hexagonales, dont la majeure partie a un diamètre moyen de cercle circonscrit compris entre 50 et 500 nm (500 et 5.000 A).

6. Adsorbant selon l'une des revendications précédentes, caractérisé en ce que le tamis moléculaire a un taux d'échange en cation divalent au moins égal à 65%.

7. Adsorbant selon la revendication 6, caractérisé en ce que le taux d'échange en cation divalent du tamis moléculaire est compris entre 65% et 85%.

8. Adsorbant selon l'une des revendications précédentes, caractérisé en ce que le cation divalent est le cation calcium.

9. Adsorbant selon l'une des revendications précédentes, caractérisé en ce que le tamis moléculaire a une concentration en halogène inférieure à 0,15%.

10. Procédé de purification de gaz faible taux de recouvrement en impuretés à adsorber, lesdites impuretés étant l'azote, l'oxyde de carbone, le méthane ou les hydrocarbures, caractérisé en ce qu'il consiste à utiliser un adsorbant selon l'une des revendications précédentes.

11. Procédé selon la revendication 10, caractérisé en ce que le gaz à purifier est l'hydrogène.

12. Procédé selon la revendication 10, caractérisé en ce que le gaz à purifier est l'air.

## Patentansprüche

1. Sorptionsmittel auf Molekularsiebbasis für die Reinigung von Gasen mittels Adsorption der Verunreinigungen, die polarer oder stärker polarisierbar sind als das Gas/die Gase, das/die gereinigt werden soll(en), mit einem geringen Bedeckungsgrad an adsorbierten Verunreinigungen, vom Typ der ein Molekularsieb vom Typ Zeolith 5A und ein tonartiges Bindemittel vom Typ Kaolin umfaßt, dadurch gekennzeichnet, daß der Kaolin, bezogen auf das Trockengewicht, eine Gewichtskonzentration an Kaolinit von mindestens 75% und von höchstens 20% an Quarz aufweist.

2. Sorptionsmittel nach Anspruch 1, dadurch gekennzeichnet, daß die Gewichtskonzentration an tonartigem Bindemittel im Sorptionsmittel 10 bis 40%, vorzugsweise 10 bis 30% ausmacht.

3. Sorptionsmittel nach Anspruch 1 oder 2, dadurch gekennzeichnet, daß das tonartige Bindemittel, bezogen auf das Trockengewicht, eine Gewichtskonzentration an Kaolinit von mindestens 80% aufweist.

4. Sorptionsmittel nach Anspruch 1, 2 oder 3, dadurch gekennzeichnet, daß das tonartige Bindemittel, bezogen auf das Trockengewicht, eine Gewichtskonzentration an Quarz von höchstens 12% aufweist.

5. Sorptionsmittel nach einem der Ansprüche 1 bis 4, dadurch gekennzeichnet, daß das tonartige Bindemittel im wesentlichen aus Kaolinit in Form von hexagonalen Plättchen besteht, deren Hauptteil einen mittleren Durchmesser des umschriebenen Kreises zwischen 50 und 500 nm (500 und 5 000 Å) aufweist.

6. Sorptionsmittel nach einem der vorangehenden Ansprüche, dadurch gekennzeichnet, daß das Molekularsieb einen Austauschgrad für zweiwertiges Kation von mindestens 65% aufweist.

7. Sorptionsmittel nach Anspruch 6, dadurch gekennzeichnet, daß der Austauschgrad für zweiwertiges Kation des Molekularsiebs 65 bis 85% ausmacht.

8. Sorptionsmittel nach einem der vorangehenden Ansprüche, dadurch gekennzeichnet, daß das zweiwer-

7

tige Kation das Calciumkation ist.

9. Sorptionsmittel nach einem der vorangehenden Ansprüche, dadurch gekennzeichnet, daß das Molekularsieb eine Halogenkonzentration von weniger als 0,15% aufweist.

10. Verfahren zur Reinigung von Gasen mit geringem Bedeckungsgrad an Verunreinigungen, die adsorbiert werden sollen, wobei die Verunreinigungen Stickstoff, Kohlenoxid, Methan oder Kohlenwasserstoffe sind, dadurch gekennzeichnet, daß man ein Sorptionsmittel nach einem der vorangehenden Ansprüche verwendet.

11. Verfahren nach Anspruch 10, dadurch gekennzeichnet, daß das Gas, das gereinigt werden soll, Wasserstoff ist.

12. Verfahren nach Anspruch 10, dadurch gekennzeichnet, daß das Gas, das gereinigt werden soll, Luft ist.

## Claims

1. Adsorbent based on molecular sieve for the purification of gases by adsorption of impurities which are more polar or more polarisable than the gas(es) to be purified with a low occlusion ratio in respect of adsorbed impurities, of the type comprising a molecular sieve of the zeolite 5A type and a clayey binder of the kaolin type, characterised in that the said kaolin has a weight concentration of at least 75% of kaolinite and not more than 20% of quartz, on a dry basis.

2. Adsorbent according to claim 1, characterised in that the weight concentration of the clayey binder in the adsorbent is between 10 and 40%, preferably between 10 and 30%.

3. Adsorbent according to claim 1 or 2, characterised in that the clayey binder has a weight concentration of kaolinite of at least 80% on a dry basis.

4. Adsorbent according to claim 1, 2 or 3, characterised in that the clayey binder has a weight concentration of quartz not more than 12% on a dry basis.

5. Adsorbent according to one of claims 1 to 4, characterised in that the clayey binder consists essentially of kaolinite in the form of hexagonal platelets the majority of which have a mean circumscribed circle diameter of between 50 and 500 nm.

6. Adsorbent according to one of the preceding claims, characterised in that the molecular sieve has a divalent cation exchange ratio of at least 65%.

7. Adsorbent according to claim 6, characterised in that the divalent cation exchange ratio of the molecular sieve is between 65% and 85%.

8. Adsorbent according to one of the preceding claims, characterised in that the divalent cation is the calcium cation.

9. Adsorbent according to one of the preceding claims, characterised in that the molecular sieve has a halogen concentration below 0.15%.

10. Gas purification process with a low occlusion ratio in respect of impurities to be adsorbed, the said impurities being nitrogen, carbon monoxide, methane or hydrocarbons, characterised in that it consists in employing an adsorbent according to one of the preceding claims.

11. Process according to claim 10, characterised in that the gas to be purified is hydrogen.

12. Processing according to claim 10, characterised in that the gas to be purified is air.